**Europäisches Patentamt**

**European Patent Office**

**Office européen des brevets**

(19)

(11) Veröffentlichungsnummer : **0 101 923**
**B1**

(12)

# EUROPÄISCHE PATENTSCHRIFT

(45) Veröffentlichungstag der Patentschrift :
28.05.86

(51) Int. Cl.⁴ : **B 65 G 43/02**

(21) Anmeldenummer : **83107302.8**

(22) Anmeldetag : **25.07.83**

(54) Überwachung von Fördergurten auf Längsrisse.

(30) Priorität : **28.07.82 DE 3228206**

(43) Veröffentlichungstag der Anmeldung :
**07.03.84 Patentblatt 84/10**

(45) Bekanntmachung des Hinweises auf die Patenterteilung : **28.05.86 Patentblatt 86/22**

(84) Benannte Vertragsstaaten :
**AT BE CH DE FR GB IT LI NL SE**

(56) Entgegenhaltungen :
**DE-A- 1 813 861**
**DE-B- 1 756 660**
**US-A- 3 792 459**

(73) Patentinhaber : **Conrad Scholtz AG**
**Am Stadtrand 55/59**
**D-2000 Hamburg 70 (DE)**

(72) Erfinder : **Dobert, Manfred, Dipl.-Ing.**
**Raschweg 31**
**D-2000 Hamburg 73 (DE)**
Erfinder : **Triebel, Wilfried**
**Reineckendorfer Strasse 45c**
**D-2000 Hamburg 73 (DE)**

(74) Vertreter : **Lieck, Hans-Peter, Dipl.-Ing.**
**Lieck & Betten Patentanwälte Maximiliansplatz 10**
**D-8000 München 2 (DE)**

**Beschreibung**

Die Erfindung betrifft ein Verfahren zum Überwachen eines endlos umlaufenden Fördergurtes aus Gummi oder dergleichen, insbesondere eines Stahlseilgurtes, auf das Auftreten von Längsrissen nach dem Oberbegriff des Anspruches 1 sowie eine Vorrichtung zur Durchführung dieses Verfahrens nach dem Oberbegriff von Anspruch 3.

Aus der US-PS 3 792 459 sind ein derartiges Verfahren und eine derartige Vorrichtung bekannt, bei denen die Kopplung zwischen der Abtasteinrichtung bzw. ihrer elektrischen Prüfschaltung und den einzelnen Querelementen ausschließlich kapazitiv erfolgt. Die beiden Elektroden der Abtasteinrichtung sind mit einem geringen Abstand von der Unterseite des Fördergurtes angeordnet, so daß sie den Fördergurt nicht berühren. Die leitfähigen Querelemente im Fördergurt sind vom elastomeren Werkstoff des Fördergurtes vollständig umgeben und dadurch nach außen elektrisch isoliert. Der Prüfstrom durch die einzelnen Querelemente muß über die beiden Kapazitäten fließen, die zwischen den beiden Elektroden und dem jeweils passierenden Querelement gebildet werden. Wegen des relativ großen Abstandes zwischen den Elektroden und den Querelementen und wegen der relativ geringen Flächenabmessungen der Querelemente sind diese Kapazitäten sehr klein. Deshalb ist es bei der bekannten Anordnung schwer, wenn nicht unmöglich, einen Prüfstrom signifikanter Stärke zu erhalten, der sich von den bei gebrochenen Querelementen nach wie vor vorhandenen Streuströmen sicher unterscheiden läßt. Wohl aus diesem Grunde ist die kapazitive Kopplung, soweit bekannt, in der Praxis nie ausgeführt worden.

Es ist auch bekannt, vgl. DE-OS 1 813 861 und DE-AS 1 756 660, statt einer kapazitiven Kopplung eine auschließlich galvanische Kopplung zwischen den Querelementen und den Elektroden der Abtasteinrichtung anzuwenden, zu welchem Zweck die Querelemente im Fördergurt mindestens an ihren Enden galvanisch zugänglich sein und die Elektroden der Abtasteinrichtung in ständiger Berührung mit dem laufenden Fördergurt stehen müssen. Hierbei ist es leicht, einen signifikanten Prüfstrom zu erhalten, solange die metallische Berührung zwischen den Elektroden und den Enden des jeweiligen Querelementes gewährleistet ist. Allerdings hat es sich in der Praxis gezeigt, daß dies nicht immer der Fall ist. So kommt es bei bestimmten Fördergütern, z. B. bei der Förderung von Salz, allmählich zu einer dünnschichtigen Ablagerung auf dem Fördergurt, die praktisch entfernbar ist und den galvanischen Kontakt zu den Querelementen unterbindet.

Der Erfindung liegt die Aufgabe zugrunde, das eingangs genannte Verfahren zur Überwachung von Fördergurten auf Längsrisse so weiter zu bilden, daß ein signifikanter Prüfstrom erhalten wird, der die sichere Erkennung unterbrochener Querelemente ermöglicht, ohne hierbei auf den Vorteil der kapazitiven Abtastung verzichten zu müssen, auch dann noch durchführbar zu sein, wenn sich auf der Fördergurt-Oberfläche isolierende Schmutzschichten bilden. Ferner soll eine Vorrichtung zur Durchführung dieses Verfahrens angegeben werden.

Die Aufgabe wird erfindungsgemäß mit dem im Anspruch 1 gekennzeichneten Verfahren und mit der im Anspruch 3 gekennzeichneten Vorrichtung gelöst, wobei vorteilhafte Ausgestaltungen des Verfahrens und der Vorrichtung aus den jeweils anschließenden Unteransprüchen hervorgehen.

Beim erfindungsgemäßen Verfahren wird grundsätzlich mit galvanischer Kopplung zwischen den Querelementen und der Prüfschaltung gearbeitet, also mit fortlaufender Berührung des Fördergurtes durch die Abtasteinrichtung. Gleichzeitig ist aber durch ausschließliche Verwendung einer hochfrequenten Prüfspannung und entsprechend hohe Festlegung des Grenzwertes des Durchgangs-Widerstandes der Querelemente Vorsorge dafür getroffen, daß auch dann die Überwachung weiter einwandfrei funktioniert, wenn sich auf der Oberfläche des Fördergurtes eine isolierende Schmutzschicht ausbildet. In diesem Falle stellt sich die Kopplung zu den Querelementen quasi selbsttätig von einer galvanischen auf eine kapazitive um, wobei die Schmutzschicht das Dielektrikum eines Kondensators darstellt, dessen beide Elektroden die bis dahin galvanisch zusammenwirkenden Kopplungselemente sind. Da die an sich galvanisch zusammenwirkenden Kopplungselemente räumlich dicht benachbart sind — die Schmutzschicht ist regelmäßig äußerst dünn (z. B. 0,1 mm) — ist die Kapazität des so gebildeten Kondensators ausreichend groß, um einen signifikanten Prüfstrom zu erhalten. Beim erfindungsgemäßen Verfahren bleiben also die grundsätzlichen Vorteile einer galvanischen Kopplung zwischen Querelementen und Abtasteinrichtung voll erhalten. Gleichzeitig wird eine hohe Überwachungssicherheit auch bei Fördergurt-Verschmutzungen erzielt.

Trotz der mit dem erfindungsgemäßen Verfahren erzielbaren relativ hohen Kopplungs-Kapazität zwischen Querelementen und Abtasteinrichtung wird der über die intakten Querelemente fließende Prüfstrom bei Übergang von galvanischer auf kapazitive Kopplung deutlich kleiner. Um insbesondere dann den durch die Querelemente hindurchgehenden Prüfstrom von anderen Streusignalen besser unterscheiden zu können, arbeitet man zweckmäßig gemäß Anspruch 2 mit einer Prüfspannung, die mit einem Kennungssignal moduliert ist.

Selbstverständlich kann auch durch Wahl einer sehr hohen Frequenz der Prüfspannung bei kapazitiver Kopplung ein hoher Prüfstrom erzielt werden. Doch sind Prüfspannungs-Frequenzen über einigen hundert Kilohertz schaltungstechnisch nicht mehr so leicht beherrschbar. Bei dem Kennungssignal zur Identifizierung der Prüfspannung kann es sich um eine bestimmte Impulsfolge handeln ; am einfachsten dürfte jedoch die Verwendung eines bestimmten tonfrequenten Signales als Kennungssignal sein.

Die in Anspruch 3 gekennzeichnete Vorrichtung nach der Erfindung ist zur Durchführung des erfindungsgemäßen Verfahrens deswegen besonders geeignet, weil die Kontaktzonen in der oder den Deckschichten des Fördergurtes großflächig ausgebildet werden können, so daß sich auch aufgrund der Fläche eine hohe Kopplungskapazität zwischen Querelementen und Abtasteinrichtung bzw. den Abtastorganen derselben ergibt. Die Elektroden der Abtastorgane wird man zweckmäßigerweise gemäß Anspruch 4 flächenmäßig genau so groß wie die Kontaktzonen machen, weil der von ihnen mit den Kontaktzonen gebildete Kondensator eine Kapazität hat, deren Größe sich letztlich nach der kleineren Fläche richtet. Allerdings ist eine geringfügig größere Abmessung der ortsfesten Elektroden gegenüber den Kontaktzonen zur Kompensation seitlicher Lageveränderungen des Fördergurtes angebracht.

Eine geeignete Größe der Abmessung der vorzugsweise rechteckigen Kontaktzonen in Längsrichtung des Fördergurtes geht aus Anspruch 5 hervor.

Kleinere Längsabmessungen führen zu kleineren Kopplungskapazitäten ; größere Längsabmessungen erhöhen die Baugröße der Abtastorgane bzw. der flächigen Elektroden in einem unpraktischen Ausmaß.

Im Sinne einer möglichst großen Kopplungskapazität wird man auch die Abmessung der Kontaktzonen und entsprechend der Abtast-Elektroden in Querrichtung des Fördergurtes möglichst groß machen. Dies ist ohne nennenswerte Einschränkung bei einer Ausbildung der erfindungsgemäßen Vorrichtung nach Anspruch 6 möglich, mit anderen Worten bei einer Ausbildung, bei der eine Kopplung der beiden Abtast-Elektroden, sei sie galvanisch oder kapazitiv, wenigstens zu einem bestimmten Prüfungszeitpunkt ausschließlich mit den beiden Kontaktzonen eines betrachteten Querelementes, und nicht mit dem Querelement selber zustande kommt. Nur dann ist gewährleistet, daß breite Elektroden im Meßzeitpunkt etwaige Längsrisse im betrachteten Querstreifen durch ihre eigene Leitfähigkeit nicht « überdecken », und deshalb ein intakter Querstreifen vorgetäuscht wird.

Eine, jedenfalls unter dem Gesichtspunkt der Fördergurt-Herstellung, einfachere Ausbildung jedes Querelementes mit zugehörigen Kontaktzonen, nämlich als ein über die gesamte Breite des Fördergurtes durchgehender, an der Oberfläche einer Deckschicht freiliegender Streifen aus leitfähigem Material kann man anwenden, wenn man auf große Querabmessungen der beiden Abtast-Elektroden verzichtet und diese an den Randbereichen des Fördergurtes anordnet.

Dann wirkt allerdings nur der Abschnitt des genannten Streifens zwischen den beiden Elektroden als eigentliches Querelement, in dem sich Längsrisse bzw. Schlitze bemerkbar machen. Risse oder Schlitze in den die Kontaktflächen bildenden Endabschnitten der Streifen können wegen der Überdeckung durch die Elektroden nicht erkannt werden. Da man eine bestimmte Abmessung der Elektroden in Querrichtung wegen der damit verbundenen Verringerung der Kopplungskapazität praktisch nicht unterschreiten kann, bleiben bei der Ausbildung der Querelemente und ihrer Kontaktzonen als einfache Streifen die Randzonen des Fördergurtes in gewisser Breite zwangsläufig unüberwacht.

Bei der etwas komplexeren Ausbildung und Anordnung der Querelemente und ihrer Kontaktzonen nach Anspruch 6 ist der letztgenannte Nachteil nicht vorhanden ; außerdem können ohne Einschränkung Kontaktzonen und Elektroden auch in Querrichtung des Fördergurtes groß gemacht werden, was die Kopplungskapazität in günstiger Weise vergrößert.

Für die praktische Verwirklichung einer Ausbildung nach Anspruch 6 gibt es mehrere Möglichkeiten. So können die Kontaktzonen nebeneinander in einer Deckschicht des Fördergurtes und das zugehörige Querelement gegenüber denselben in der anderen Deckschicht des Fördergurtes untergebracht sein, wobei kurze elektrische Verbindungen von den beiden äußersten Enden des Querelementes über die Dicke des Fördergurtes zu den Kontaktzonen verlaufen.

Bei einer anderen Möglichkeit befinden sich die Querelemente und Kontaktzonen in der gleichen Deckschicht, wobei die Kontaktzonen zu ihrem jeweiligen Querelement entweder gleiche oder auch unterschiedliche Längsabstände haben und elektrische Verbindungen zwischen Querelement und Kontaktzone in schmaler Bahn an den beiden Kanten des Fördergurtes verlaufen. Ganz besonders bevorzugt wird eine versetzte Anordnung der beiden Kontaktzonen jedes Querelementes gemäß Anspruch 8 und hierbei wiederum eine solche, bei der die beiden Kontaktzonen, bezogen auf die Längsrichtung, auf den beiden Seiten ihres Querelementes vorgesehen sind. Bei dieser Anordnung kann die Vortäuschung intakter Querelemente aufgrund einer Elektroden-Überdeckung sehr einfach durch entsprechende Bemessung der Längsabstände zwischen dem Querelement und seinen Kontaktzonen in Anpassung an die Längsabmessungen der Abtast-Elektroden verhindert werden, ohne daß die Vorgabe eines Prüfzeitpunktes notwendig ist. Außerdem befinden sich Querelemente und Kontaktzonen in der gleichen Deckschicht, wobei die Querelemente wie die Kontaktzonen an der Oberfläche freiliegend ausgebildet sein können, was eine relativ leichte Herstellung des Fördergurtes ermöglicht. Schließlich besteht noch der wichtige Vorteil, daß eine unmittelbare kapazitive Kopplung zwischen den Abtastorganen selber, durch die ein tatsächlicher Riß unter Umständen ebenfalls verdeckt werden könnte, wegen des großen Abstandes zwischen den Abtastorganen einer Abtasteinrichtung mit Sicherheit vermieden ist.

Zur Vermeidung einer kapazitiven Kopplung über einen entstandenen Riß hinweg kann auch die Ausbildung nach Anspruch 7 vorteilhaft beitragen, obwohl es in der Regel genügen dürfte, zur Vermeidung einer Kopplung über einen entstandenen Riß hinweg die Querelemente ausreichend dünn, z. B. in einer Stärke von 2 mm auszubilden.

Die Anordnung mit in Längsrichtung zueinander versetzten Kontaktzonen und Abtastorganen kann auch in Verbindung mit der Ausbildung des Fördergurtes eingesetzt werden, bei der die Kontaktzonen in der einen Deckschicht und die Querelemente in der anderen Deckschicht untergebracht sind, wobei es sich hier empfehlen wird, die Querelemente in der tragseitigen Deckschicht vorzusehen, weil Längsrisse eher von dieser ausgehen und sich dann die Kontaktzonen außerdem in der saubereren, laufseitigen Deckschicht befinden.

Die Kontaktzonen sind am besten aus leitfähigem Gummi oder dergleichen gemäß Anspruch 9 gebildet. Sie müssen relativ großflächig sein. Durch die Ausbildung aus Gummi wird der Aufbau des Fördergurtes im übrigen am wenigsten gestört. Leitfähige Gummimischungen sind bekannt. Die Querelemente können in an sich bekannter Weise durch elektrisch leitende Drähte oder Litzen gebildet sein. Aus Gründen der einheitlichen Herstellung empfiehlt es sich jedoch auch hier, als Querelemente Streifen aus elektrisch leitfähigem Gummi oder dergleichen vorzusehen.

Es wurde bereits gesagt, daß bei der erfindungsgemäßen Vorrichtung die Elektroden der Abtastorgane den Fördergurt in größerer Fläche berühren sollen. Um eine schleifende Berührung und einen entsprechenden Verschleiß von Fördergurt und Elektroden zu vermeiden, sind die flächigen Elektroden jedes Abtastorganes am besten durch ein endlos umlaufendes, mindestens an der Außenseite elektrisch leitfähiges Band gebildet, das in besonders einfacher Weise durch Reibschluß mit dem Fördergurt antreibbar ist. Es kommt hier z. B. ein Metallband oder auch ein Band aus einem leitfähigen Gummi in Frage.

Bei allen Fördergurt-Überwachungen auf Längsschlitze mit leitfähigen Querelementen ist eine Vorgabe oder Markierung der Stellen des Fördergurtes für die Prüfschaltung notwendig, an denen Querelemente vorhanden sind, damit zwischen unterbrochenen und gar nicht vorhandenen Querelementen unterschieden werden kann. Auch bei der Erfindung ist diese Vorgabe oder Markierung nach allen hierzu bekannten Methoden möglich, wobei aber wegen der schon vorhandenen, relativ großen Kontaktzonen Platzprobleme auftreten können. Bei einer Weiterbildung der Erfindung gemäß Anspruch 10 sind weder im Fördergurt zusätzliche Markierungselemente noch an der Abtasteinrichtung zusätzliche Abtastorgane notwendig, um die genannte Diskriminierung zwischen unterbrochenen Querelementen und nicht vorhandenen Querelementen zu bewerkstelligen. Der mit dem Fördergurt oder seinem Antrieb gekoppelte Impulserzeuger braucht auch bei mehreren, einem Fördergurt zugeordneten Abtasteinrichtungen nur einmal vorhanden zu sein.

Im folgenden ist die Erfindung mit weiteren vorteilhaften Einzelheiten anhand schematisch dargestellter Ausführungsbeispiele näher erläutert. Es zeigen :

Figur 1 eine Prinzipdarstellung einer Überwachungs-Vorrichtung für Fördergurte mit dem überwachten Fördergurt im Querschnitt,

Figur 2 eine Seitenansicht zu Figur 1 in Richtung des Pfeiles 2 in Figur 1,

Figur 3 einen Abschnitt des überwachten Fördergurtes in Draufsicht auf die Laufseite mit einem elektrisch leitfähigen Querelement und zwei Kontaktzonen,

Figur 4 eine Figur 3 entsprechende Draufsicht mit einer anderen Anordnung von Querelement und Kontaktzonen,

Figur 5 eine Figur 3 entsprechende Draufsicht mit einer wiederum anderen Anordnung von Querelement und Kontaktzonen,

Figur 6 eine Figur 3 entsprechende Draufsicht mit einer noch anderen Anordnung von Querelement und Kontaktzonen.

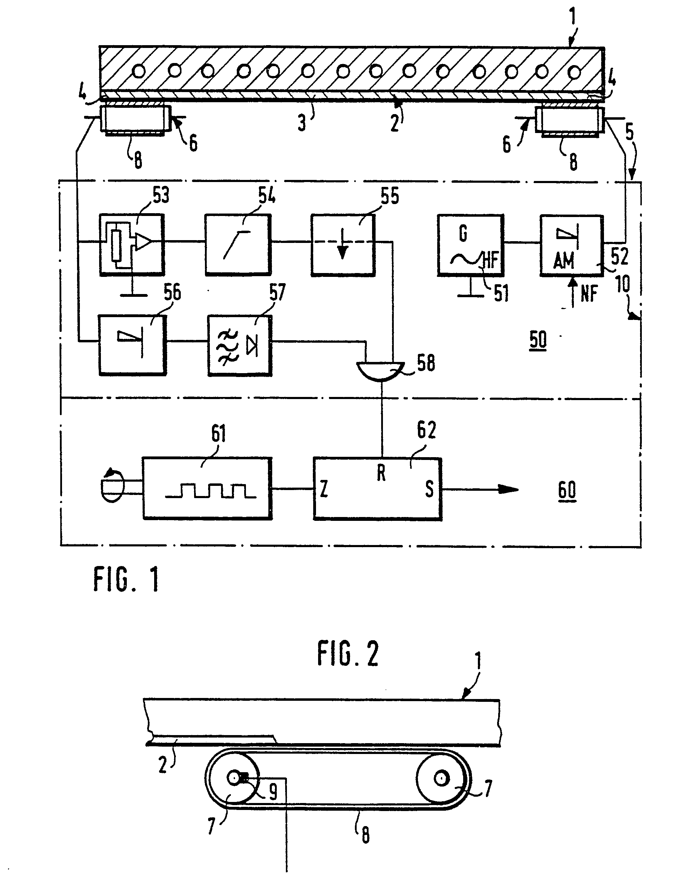

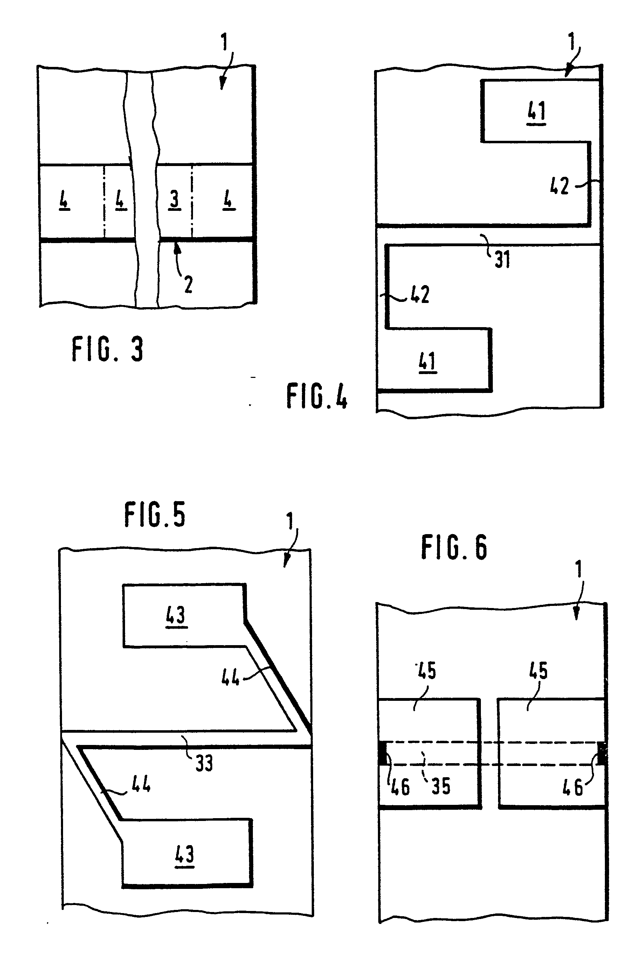

Der in Figur 1 gezeigte Stahlseil-Fördergurt 1 läuft in nicht näher gezeigter, üblicher Weise zwischen zwei Endtrommeln endlos um. In seiner laufseitigen Deckschicht sind mit gleichem gegenseitigem Längsabstand von z. B. 20 m mehrere, über die Breite des Fördergurtes reichende Streifen 2 aus elektrisch leitfähigem Gummi eingebettet, von denen ein Streifen in Figur 2 und 3 sichtbar ist. Die Streifen 2 liegen an der Oberfläche der laufseitigen Deckschicht nach außen frei. Sie haben eine Dicke von 1-2 mm und in Längsrichtung des Fördergurtes eine Abmessung von ca. 200 mm. Die beiden Endabschnitte jedes Streifens 2 in einer Breite von ebenfalls ca. 200 mm bilden jeweils eine Kontaktzone 4. Der restliche Abschnitt jedes Streifens 2 zwischen den Kontaktzonen 4 bildet ein elektrisch leitfähiges Querelement 3, dessen Durchtrennung durch Längsschlitze oder -risse überwacht wird.

Dem Fördergurt 1 ist mindestens eine Abtasteinrichtung 5 zugeordnet, die zwei Abtastorgane 6 und eine elektrische Prüfschaltung 10 umfaßt. Jedes Abtastorgan umfaßt ein zwischen zwei Rollen 7 endlos umlaufendes, flexibles Band 8 aus Metall oder einem anderen elektrisch leitfähigen Material, wie z. B. leitfähigem Gummi. Das Band 8 hat in etwa die Breite der Kontaktzonen 4 und steht mit der laufseitigen Deckschicht des Fördergurtes 1 über die Länge eines Trums zwischen den beiden Rollen 7 derart in Berührung, daß es vom Fördergurt durch Reibschluß mitgenommen wird. Die beiden Abtastorgane 6 sind an den Randbereichen des Fördergurtes 1 in einer derartigen Position in Querrichtung des Fördergurtes angeordnet, daß die Bänder 8 mit den Kontaktzonen 4 fluchten. Die Länge des Trums des Bandes 8 zwischen den beiden Rollen 7, also in etwa der Achsabstand der Rollen 7, gleicht der Abmessung der Kontaktzonen 4 in Längsrichtung des Fördergurtes.

Jedes Band 8 bildet eine flächige Elektrode, die sich mit den beim Umlauf des Fördergurtes 1 passierenden Kontaktzonen 4 galvanisch oder, wenn die Kontaktzonen 4 von einer isolierenden Schmutzschicht bedeckt sind, kapazitiv koppelt. Die elektrische Verbindung zu der Bandelektrode erfolgt von einer Zuleitung über eine in Figur 2 nur schematisch angedeutete, an sich bekannte Bürstenanordnung 9 an einer der beiden Rollen 7 und über den elektrisch leitenden Mantel dieser Rolle.

Die Prüfschaltung 10 besteht aus einer ständig arbeitenden Widerstands-Meßschaltung 50 und einer Auswertschaltung 60. Die Meßschaltung 50 umfaßt einen Spannungsgenerator 51, der eine hochfrequente Prüfspannung von einigen Volt und einer Frequenz von z. B. 100 kHz erzeugt. Dem Spannungsgenerator ist ein Modulator 52 nachgeschaltet, welcher die Prüfspannung mit einem Kennungssignal, nämlich einem tonfrequenten Signal fester Frequenz von z. B. 2 kHz moduliert. Die modulierte Prüfspannung gelangt zur Bandelektrode 8 der einen der beiden Abtastorgane 6.

An die Bandelektrode des anderen Abtastorganes 6 ist eine Strom-Meßschaltung 53 angeschlossen, die die Stromstärke des von der Prüfspannung erzeugten, zwischen den beiden Abtastorganen 6 fließenden Stromes durch eine Meßspannung darstellt, die einer Schwellwertschaltung 54 mit nachgeschaltetem monostabilem Kippglied 55 zugeführt wird. Die Meßspannung ist bei konstanter Prüfspannung umgekehrt proportional zum elektrischen Widerstand zwischen den Abtastorganen 6, der sich aus den ohmschen oder kapazitiven Übergangswiderständen zwischen den Abtastorganen 6 und den Kontaktzonen 4 sowie dem Widerstand des Querelementes 3 zwischen den Kontaktzonen 4 zusammensetzt. Der Schwellwert der Schwellwertschaltung 54 ist so eingestellt, daß die Meßspannung den Schwellwert beim Erfassen eines intakten Querelementes 3 auch dann noch überschreitet, wenn die Übergangswiderstände wegen lediglich kapazitiver Kopplung zwischen den Kontaktzonen 4 und den Bandelektroden 8 relativ hoch sind, daß aber der Schwellwert nicht mehr erreicht wird, wenn ein nicht intaktes Querelement die Abtasteinrichtung passiert. Das monostabile Kippglied 55 gibt bei jedem Erreichen des Schwellwertes einen Meßimpuls ab.

Der empfangene Prüfstrom gelangt außer zu der Strom-Meßschaltung 53 zu einem Demodulator 56, welcher das tonfrequente Kennungssignal abtrennt und einem auf die Frequenz des Kennungssignales abgestimmten Filter- und Gleichrichter-Baustein 57 zuführt, an dessen Ausgang dementsprechend nur dann eine Spannung entsteht, wenn der empfangene Prüfstrom mit dem Kennungssignal moduliert ist. Die Spannung vom Baustein 57 gelangt zu einem Und-Glied 58, dessen anderer Eingang mit dem Ausgang des Kippgliedes 55 verbunden ist. Dementsprechend führt das Und-Glied 58 an seinem Ausgang nur solche Meßimpulse, die auf einem echten, nämlich modulierten Prüfstrom beruhen.

Die Auswertschaltung 60 besteht im wesentlichen aus einem mit dem Fördergurt oder seinem Antrieb in an sich bekannter Weise gekoppelten Impulserzeuger 61, der eine Impulsreihe mit einer der Fördergurt-Geschwindigkeit proportionalen Impulsfrequenz erzeugt. Der Impulserzeuger kann beispielsweise ein Hall-Element umfassen, das durch einige an der Welle der Antriebstrommel des Fördergurtes angebrachte Permanentmagnete betätigt wird. Die Impulsreihe vom Impulserzeuger 61 gelangt zum Zähleingang eines Impulszählers 62, der an seinem Null-Rückstelleingang die Meßimpulse vom Und-Glied 58 erhält. Der Zähler hat eine einstellbare Zählgrenze, bei deren Erreichen am Ausgang S ein Zählgrenzsignal abgegeben wird. Die Zählgrenze des Zählers 62 ist so eingestellt, daß sie etwas höher liegt als die Anzahl von Impulsen, die der Impulserzeuger während der Bewegung des Fördergurtes um den Längsabstand zwischen zwei Querelementen abgibt. Dementsprechend wird der Zähler nach Rückstellung auf Null beim Passieren eines intakten Querelementes allmählich weitergezählt und, wenn das nächste Querelement ebenfalls intakt ist, noch vor Erreichen der Zählgrenze wieder auf Null zurückgestellt. Ist das nächste Querelement nicht intakt, bleibt der rückstellende Meßimpuls aus, so daß es kurz darauf zur Abgabe eines Zählgrenzimpulses kommt, der als Störungssignal zur Betätigung einer Alarmeinrichtung oder der Abschaltung des Fördergurt-Antriebes dienen kann.

Bei der Anordnung von Querelement und Kontaktzone nach Figur 3 können die Kontaktzonen und entsprechend die Bandelektroden nicht besonders breit sein, wenn man den überwachten Breiten-Bereich des Fördergurtes nicht zu sehr einschränken will. Bei der geränderten Anordnung gemäß Figur 4 ist diese Beschränkung nicht gegeben.

Hier ist ein Querelement 31 mit zwei mit Längsabstand vor und hinter dem Querelement angeordneten Kontaktzonen 41 über schmale leitende Verbindungen 42 an den beiden Kanten des Fördergurtes verbunden. Wie bei der Anordnung nach Figur 3 sind das Querelement 31 und die Kontaktzonen 41 in die laufseitige Deckschicht eingebettet und liegen an deren Oberfläche nach außen frei. Ebenso wie in Figur 3 bestehen sie aus einer dünnen Schicht leitfähigen Gummis einschließlich der Verbindungen 42. Bei der Ausbildung nach Figur 4 kann das Querelement 31 über praktisch die gesamte Breite des Fördergurtes zur Feststellung von Längsschlitzen wirksam sein. Gleichzeitig können die Kontaktzonen 41 sehr breit ausgeführt sein und im Extremfall die ganze Breite des Fördergurtes einnehmen. Wenn der Längsabstand zwischen den Kontaktzonen 41 und dem Querelement 31 größer als die Abmessung der Kontaktzonen in Längsrichtung ist, kann eine in der Prüfung sich auswirkende Überdeckung von Schlitzen im Querelement 31 durch die Bandelektroden 8 auch dann nicht vorkommen, wenn, wie bei der Schaltungsanordnung nach Figur 1, für die Prüfung kein bestimmter Zeitpunkt vorgegeben wird. Die Abmessung des Querelementes 31 in Längsrichtung des Fördergurtes ist deutlich kleiner als die entsprechende Abmessung der Kontaktzonen 41, um die beim Auftreten eines Schlitzes entstehende, den Schlitz überbrückende Störkapazität so klein wie möglich zu halten. Eine entsprechende Störkapazität zwischen den Abtastanordnungen ist dadurch verhindert, daß diese ebenso wie die Kontaktzonen und im gleichen Maß wie diese in Längsrichtung des Fördergurtes gegeneinander versetzt angeordnet sind.

Eine Abwandlung der Anordnung nach Figur 4 zeigt Figur 5, bei welcher die äußersten Enden des Querelementes 33 mit den beiden in der Mitte des Fördergurtes angeordneten, rechteckigen Kontaktzonen 43 über schräg verlaufende leitfähige Bahnen 44 verbunden sind. Die beiden Abtastorgane 6 sind entsprechend in Längsrichtung des Fördergurtes hintereinander angeordnet.

Eine wiederum andere Anordnung von Querelement 35 und Kontaktzonen 45 geht aus Figur 6 hervor. Hier befindet sich das Querelement 35 in der tragseitigen Deckschicht des Fördergurtes gegenüber den beiden zugehörigen Kontaktzonen 45, wobei elektrische Verbindungen 46 zwischen diesen an den Kanten des Fördergurtes in Richtung der Dicke desselben verlaufen.

## Patentansprüche

1. Verfahren zum Überwachen eines endlos umlaufenden Fördergurtes (1) aus Gummi oder dergleichen, insbesondere eines Stahlseilgurtes, auf das Auftreten von Längsrissen, bei welchem in den Fördergurt (1) mit gegenseitigem Längsabstand eingebettete, über die Breite des Fördergurtes (1) reichende und elektrisch gut leitfähige Querelemente (3) an mindestens einer ortsfesten Abtasteinrichtung (5) bei deren Passieren jeweils kurzzeitig mit einer Prüfschaltung (10) gekoppelt werden, die mit Hilfe einer hochfrequenten elektrischen Prüfspannung den elektrischen Durchgangs-Widerstand des jeweiligen Querelementes (3) selbsttätig überprüft und, wenn der Durchgangs-Widerstand einen bestimmten Grenzwert überschreitet, ein Störungssignal erzeugt, dadurch gekennzeichnet, daß man eine Abtasteinrichtung (5) verwendet, die sowohl eine galvanische als auch eine kapazitive Kopplung der Querelemente (3) mit der Prüfschaltung (10) ermöglicht, und daß man den Grenzwert des Durchgangs-Widerstandes so hoch festlegt, daß auch bei lediglich kapazitiver Kopplung zwischen Querelement (3) und Prüfschaltung (10) kein Störungssignal bei intaktem Querelement (3) erzeugt wird.

2. Verfahren nach Anspruch 1, dadurch gekennzeichnet, daß man eine hochfrequente Prüfspannung verwendet, die mit einem Kennungssignal moduliert ist.

3. Vorrichtung zum Überwachen eines endlos umlaufenden Fördergurtes (1) aus Gummi oder dergleichen, insbesondere eines Stahlseilgurtes, auf das Auftreten von Längsrissen mit in den Fördergurt (1) mit gegenseitigem Längsabstand eingebetteten, über die Breite des Fördergurtes (1) reichenden und elektrisch gut leitfähigen Querelementen (3) sowie mit mindestens einer ortsfesten Abtasteinrichtung (5), die zwei Abtastorgane (6) mit je einer flächigen Elektrode (8) umfaßt, wobei die Querelemente (3) beim Passieren jeder Abtasteinrichtung (5) über deren Elektroden (8) jeweils kurzzeitig mit einer Prüfschaltung (10) gekoppelt werden, die mit Hilfe einer elektrischen hochfrequenten Prüfspannung den elektrischen Durchgangs-Widerstand des jeweiligen Querelementes (3) selbsttätig überprüft und, wenn der Durchgangs-Widerstand einen bestimmten Grenzwert überschreitet, ein Störungssignal erzeugt, dadurch gekennzeichnet, daß die leitfähigen Querelemente (3) des Fördergurtes (1) an ihren beiden Enden jeweils mit einer elektrisch gut leitfähigen, nach außen frei liegenden, flächigen Kontaktzone (4) in einer der beiden Deckschichten des Fördergurtes verbunden sind, daß die Elektroden (8) jeder Abtasteinrichtung (5) den Fördergurt (1) im Bereich der Kontaktzonen (4) berühren, und daß in der Prüfschaltung (10) der Grenzwert des Durchgangs-Widerstandes so hoch festgelegt ist, daß auch bei lediglich kapazitiver Kopplung zwischen Querelement (3) und Prüfschaltung (10) kein Störungssignal bei intaktem Querelement erzeugt wird.

4. Vorrichtung nach Anspruch 3, dadurch gekennzeichnet, daß die Flächenabmessungen der Elektroden (8) in etwa so groß wie die entsprechenden Abmessungen der Kontaktzonen (4) sind.

5. Vorrichtung nach Anspruch 3 oder 4, dadurch gekennzeichnet, daß die Abmessung der Kontaktzonen (4) in Längsrichtung des Fördergurtes zwischen 100 und 500 mm beträgt.

6. Vorrichtung nach Anspruch 3, 4 oder 5, dadurch gekennzeichnet, daß die Querelemente (3) im Fördergurt (1) jeweils an einer Stelle angeordnet sind, an der sie von den Elektroden (8) der Abtastorgane (6) nicht berührt werden oder einen Abstand in Längsrichtung des Fördergurtes (1) von ihren Kontaktzonen (4) haben.

7. Vorrichtung nach einem der Ansprüche 3 bis 6, dadurch gekennzeichnet, daß die Abmessung der Kontaktzonen (4) in Längsrichtung des Fördergurtes (1) um ein Mehrfaches größer als die entsprechende Abmessung der Querelemente (3) ist.

8. Vorrichtung nach einem der Ansprüche 3 bis 7, dadurch gekennzeichnet, daß die beiden Kontaktzonen (4) jedes Querelementes (3) und entsprechend die beiden Abtastorgane (6) jeder Abtasteinrichtung (5) in Längsrichtung des Fördergurtes (1) gegeneinander versetzt sind.

9. Vorrichtung nach einem der Ansprüche 3 bis 8, dadurch gekennzeichnet, daß die Kontaktzonen (4) und/oder die Querelemente (3) jeweils durch eine Schicht elektrisch leitfähigen Gummis oder dergleichen gebildet sind.

10. Vorrichtung nach einem der Ansprüche 3 bis 10, dadurch gekennzeichnet, daß die Prüfschaltung (10) eine ständig arbeitende Widerstands-Meßschaltung (50) umfaßt, die bei jedem Unterschreiten des bestimmten Grenzwertes für den Durchgangs-Widerstand der Querelemente (3) einen Meßimpuls abgibt, daß ein mit dem Fördergurt (1) oder seinem Antrieb gekoppelter Impulserzeuger (61) eine Impulsreihe mit einer der Fördergurt-Geschwindigkeit proportionalen Impulsfrequenz erzeugt, daß ein Impulszähler (62) mit einer bestimmten Zählgrenze vorgesehen ist, welcher an seinem Zähleingang die Impulsreihe und an einem Null-Rückstellungseingang die Meßimpulse erhält und bei Erreichen seiner Zählgrenze einen Zählgrenzimpuls als Störungssignal abgibt, und daß die Zählgrenze auf einen Wert eingestellt ist, der größer als die dem größten gegenseitigen Längsabstand der Querelemente (3) entsprechende Impulsanzahl vom Impulserzeuger ist.

**Claims**

1. Method for monitoring an endlessly circulating conveyor belt (1) of rubber or the like, in particular a steel cable belt, for the appearance of longitudinal rips, wherein transverse elements (3) embedded in the conveyor belt (1) with mutual longitudinal spacing, extending across the width of the conveyor belt (1) and satisfactorily conductive electrically, are in each case coupled briefly to a test circuit (10) upon passing at least one stationary scanning system (5), which circuit automatically checks the current-flow resistance of the transverse element (3) in question by means of an electrical high-frequency test voltage and generates a disturbance signal if the current-flow resistance exceeds a particular limiting value, characterised in that use is made of a scanning system (5) which allows galvanic as well as a capacitive coupling of the transverse elements (3) with the test circuit (10), and in that the limiting value of the current-flow resistance is set so high that no disturbance signal is generated if the transverse element (3) is undamaged, even in the case of a merely capacitive coupling between the transverse element (3) and the test circuit (10).

2. Method according to claim 1, characterised in that use is made of a high-frequency test voltage, which is modulated by means of an identification signal.

3. Device for monitoring an endlessly circulating conveyor belt (1) of rubber or the like, in particular a steel cable belt, for the appearance of longitudinal rips, comprising transverse elements (3) which are embedded in the conveyor belt (1) with mutual longitudinal spacing, extending across the width of the conveyor belt and of satisfactory electrical conductivity, as well as at least one stationary scanning system (5) incorporating two scanning elements (6) comprising an areal electrode (8) in each case, the transverse elements (3) being briefly coupled to a test circuit upon passing each scanning system (5) via its electrodes (8), which system automatically checks the electrical current-flow resistance of the transverse element (3) in question by means of an electrical high-frequency test voltage and generates a disturbance signal if the current-flow resistance exceeds a definite limiting value, characterised in that the conductive transverse elements (3) of the conveyor belt (1) are connected in each case at both their extremities to an electrically satisfactorily conductive, outwardly exposed and areal contact section (4) in one of the two covering layers of the conveyor belt, in that the electrodes (8) of each scanning system (5) touch the conveyor belt (1) in the area of the contact sections (4) and in that the limiting value of the current-flow resistance is set so high in the test circuit (10) that no disturbance signal is generated if the transverse element is undamaged, even in the case of a merely capacitive coupling between the transverse element (3) and the test circuit (10).

4. Device according to claim 3, characterised in that the areal dimensions of the electrodes (8) are approximately as great as the corresponding dimensions of the contact sections (4).

5. Device according to claim 3 or 4, characterised in that the dimension of the contact sections (4) in the longitudinal direction of the conveyor belt amounts to between 100 and 500 mms.

6. Device according to claim 3, 4 or 5, characterised in that the transverse elements (3) are in each case arranged at a point in the conveyor belt (1) at which they are not touched by the electrodes (8) of the scanning elements (6) or have a spacing from their contact sections (4) in the longitudinal direction of the conveyor belt (1).

7. Device according to one of claims 3 to 6, characterised in that the dimension of the contact sections (4) in the longitudinal direction of the conveyor belt (1) is greater by a multiple than the corresponding dimension of the transverse elements (3).

8. Device according to one of claims 3 to 7, characterised in that the two contact sections (4) of each transverse element (3) and commensurately, the two scanning elements (6) of each scanning system (5), are staggered with respect to each other in the longitudinal direction of the conveyor belt (1).

9. Device according to one of claims 3 to 8, characterised in that the contact sections (4) and/or the transverse elements (3) are in each case formed by a layer of electrically conductive rubber or the like.

10. Device according to one of claims 3 to 10, characterised in that the test circuit (10) comprises a constantly operating resistance-measuring circuit (50), which transmits a measurement pulse every time the current-flow resistance of the transverse elements (3) passes below the particular limiting value for the same, in that a pulse generator (61) coupled to the conveyor belt (1) or to its drive generates a pulse series at a pulse frequency proportional to the speed of the conveyor belt, in that a pulse counter (62) having a particular counting limit is provided, which receives the pulse series at its counting input terminal and the measurement pulses as a zero reset input terminal, and emits a counting limit pulse as a disturbance signal when its counting limit is reached, and in that the counting limit is adjusted to a value which is greater than the number of pulses from the pulse generator corresponding to the maximum mutual longitudinal spacing of the transverse elements (3).

**Revendications**

1. Procédé de contrôle d'une courroie transporteuse (1) sans fin en caoutchouc ou en un matériau analogue, en particulier d'une sangle à câble d'acier, pour la détection de fissures longitudinales, dans lequel des éléments transversaux (3) insérés dans la courroie transporteuse (1) à une distance déterminée les uns des autres dans le sens longitudinal, s'étendant sur toute la largeur de la courroie transporteuse (1) et électriquement bons conducteurs sont, lors de leur passage au niveau d'au moins un dispositif d'exploration (5) monté à poste fixe, couplés pendant peu de temps, à un circuit de contrôle (10) qui, en utilisant une tension de contrôle électrique de haute fréquence, contrôle automatiquement la résistance de passage électrique de chaque élément transversal (3) et, lorsque la résistance de passage dépasse une certaine valeur limite émet un signal de dérangement, caractérisé en ce que l'on utilise un dispositif d'exploration (5) qui permet aussi bien un couplage galvanique qu'un couplage capacitif des éléments transversaux (3) avec le circuit de contrôle (10) et en ce que l'on place la valeur limite de la résistance de passage suffisamment haut pour que, même lorsqu'il n'y a qu'un couplage capacitif entre l'élément transversal (3) et le circuit de contrôle (10), aucun signal de dérangement n'est émis lorsque l'élément transversal (3) est intact.

2. Procédé selon la revendication 1, caractérisé en ce que l'on utilise une tension de contrôle à haute fréquence qui est modulée par un signal d'identité.

3. Dispositif pour le contrôle d'une courroie transporteuse (1) sans fin en caoutchouc ou en un matériau analogue, en particulier d'une sangle à câble d'acier, pour la détection de fissures longitudinales, qui comporte des éléments transversaux (3) insérés dans la courroie transporteuse (1) à une distance déterminée les uns des autres dans le sens longitudinal, s'étendant sur toute la largeur de la courroie transporteuse (1) et électriquement bons conducteurs et au moins un dispositif d'exploration (5) monté à poste fixe qui comprend deux organes d'exploration (6) comportant chacun une électrode plane (8), les éléments transversaux (3) étant lors de leur passage au niveau de chacun des dispositifs d'exploration (5) couplés chaque fois, par l'intermédiaire de leurs électrodes (8), pendant un temps court avec un circuit de contrôle (10) qui, à l'aide d'une tension de contrôle électrique à haute fréquence, contrôle automatiquement la résistance de passage de l'élément transversal (3) correspondant et, lorsque la résistance de passage dépasse une valeur limite déterminée, émet un signal de dérangement caractérisé en ce que les éléments transversaux (3) conducteurs de la courroie transporteuse (1) sont reliés chacun à leurs deux extrémités à une zone de contact plane (4) conductrice, dégagée vers l'extérieur, située dans l'une des deux couches de couverture de la courroie transporteuse, en ce que les électrodes (8) de chaque dispositif d'exploration (5) touchent la courroie transporteuse (1) dans la région des zones de contact et en ce que dans le circuit de contrôle (10) la valeur limite de la résistance de passage est placée assez haut pour que, même lorsqu'il n'y a qu'un couplage capacitif entre l'élément transversal (3) et le circuit de contrôle (10), aucun signal de dérangement n'est émis lorsque l'élément transversal est intact.

4. Dispositif selon la revendication 3, caractérisé en ce que les dimensions de surface des électrodes (8) sont à peu près égales aux dimensions correspondantes des zones de contact (4).

5. Dispositif selon les revendications 3 ou 4, caractérisé en ce que la dimension des zones de contact (4) dans le sens de la longueur de la courroie transporteuse est comprise entre 100 et 500 mm.

6. Dispositif selon la revendication 3, 4 ou 5 caractérisé en ce que les éléments transversaux (3) insérés dans la courroie transporteuse (1) sont placés chacun à un endroit où ils ne sont pas touchés par les électrodes (8) des organes d'exploration (6) ou sont, dans le sens de la longueur de la courroie transporteuse (1), à une certaine distance de leurs zones de contact (4).

7. Dispositif selon l'une des revendications 3 à 6, caractérisé en ce que la dimension des zones de contact (4) dans le sens de la longueur de la courroie transporteuse (1) est un multiple de la dimension correspondante des éléments transversaux (3).

8. Dispositif selon l'une des revendications 3 à 7, caractérisé en ce que les deux zones de contact (4) de chaque élément transversal (3) et les deux organes d'exploration (6) correspondants de chaque dispositif d'exploration (5) sont décalés les uns par rapport aux autres dans le sens de la longueur de la courroie transporteuse (1).

9. Dispositif selon l'une des revendications 3 à 8, caractérisé en ce que, les zones de contact (4) et/ou les éléments transversaux (3) sont formés chacun d'une couche de caoutchouc électriquement conducteur ou d'un matériau analogue.

10. Dispositif selon l'une des revendications 3 à 9, caractérisé en ce que le circuit de contrôle (10) comprend un circuit de mesure de résistance (50) qui fonctionne en permanence et qui, chaque fois que la résistance de passage d'un élément transversal (3) dépasse la valeur limite fixée, émet une impulsion de mesure, en ce qu'un générateur d'impulsions (61) couplé avec la courroie transporteuse (1) ou avec son dispositif d'entraînement émet une série d'impulsions avec une fréquence d'impulsion proportionnelle à la vitesse de la courroie transporteuse, en ce qu'un compteur d'impulsions (62) comporte une limite de comptage déterminée, reçoit à son entrée de comptage, la série d'impulsions et à une entrée de retour à zéro, les impulsions de mesure et lorsque la limite de comptage est atteinte, émet une impulsion de limite de comptage sous la forme d'un signal de dérangement et en ce que la limite de comptage est réglée à une valeur qui est supérieure au nombre d'impulsions du générateur d'impulsions correspondant à la plus grande distance réciproque dans le sens longitudinal entre les éléments transversaux (3).

FIG. 1

FIG. 2

FIG. 3

FIG.4

FIG.5

FIG. 6